(19) Europäisches Patentamt / European Patent Office / Office européen des brevets

(11) **EP 2 730 451 A1**

(12) **EUROPEAN PATENT APPLICATION**

(43) Date of publication:
14.05.2014 Bulletin 2014/20

(51) Int Cl.:
*B60L 11/18* *(2006.01)*       *H02J 5/00* *(2006.01)*

(21) Application number: 12192417.9

(22) Date of filing: 13.11.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• Noack, Ferenc
  12353 Berlin (DE)

• **Lange, Christian**
  **10365 Berlin (DE)**

(74) Representative: **Kröhnert, Michael et al**
**Alcatel-Lucent Deutschland AG**
**Intellectual Property & Standards**
**Lorenzstrasse 10**
**70435 Stuttgart (DE)**

Remarks:
Amended claims in accordance with Rule 137(2) EPC.

(54) **A device and a method for controlling an induction coil**

(57)    The invention concerns a device (104) adapted to control an induction coil (101, 102) and a respective method for controlling an induction coil (101, 102) comprising determining from information about the power transfer of a first induction coil (101) a set point (te2, ta2) for a second induction coil (102).

**Fig. 1**

**Description**

**Field of the invention**

The invention relates to a device and a method for controlling an induction coil.

**Background**

Inductive charging systems are one option to recharge electrical vehicles when parked or while moving. Inductive charging systems comprise an induction coil as primary coil. The primary coil is used to generate an electromagnetic field suitable to penetrate a secondary coil of an electric vehicle when the secondary coil is near the primary coil. The best efficiency of the charging is achieved when the alignment between the primary coil and the secondary coil is optimal for energy transfer. When vehicle is parked this alignment is for example achieved by parking the electrical vehicle so that the secondary coil overlaps with the primary coil. In charging systems for moving vehicles multiple primary coils are typically mounted on a lane of a road one after another with a certain distance in-between the primary coils. In such systems it is important to predict the alignment of the secondary coil of the moving vehicle and the primary coils for optimal energy transfer.

**Summary**

The object of the invention is thus to provide improved control for induction coils in charging systems for movable vehicles.

The main idea of the invention is to control an induction coil by determining from information about the power transfer of a first induction coil a set point for a second induction coil.

Advantageously a first set point for the switching time for operating a first induction coil in a first pre-determined operating mode is determined, and a second set point for the switching time for operating a second induction coil in a second pre-determined operating mode is determined.

Advantageously, the offset is determined depending on the first set point and an offset.

Advantageously, the offset is determined depending on the difference between the first set point and a reference time. This increases the accuracy of the offset.

Advantageously, the offset is determined from information about a third induction coil, in particular the efficiency of the power transfer between the first induction coil and the third induction coil. This way the offset is determined specifically for the secondary coil of the vehicle moving across the lane of the road.

Preferably, the reference time is determined depending on the information about the efficiency. The efficiency is easily measurable and can be used to look up the reference time in a characteristic curve of the inductive charging system.

Advantageously, the first set point is determined from information for the speed at which the third induction coil is moving relative to the first induction coil. This gives a good estimate for the first set point without knowledge about the offset yet.

Advantageously, the first set point is determined from information about the distance between the third induction coil and the first induction coil. This further improves the estimation.

Advantageously, the offset is determined depending on a first pair of values indicative of a first efficiency and a first reference time for switching into a first pre-determined operating mode. Using the first pair of values simplifies the calculation and improves the processing speed.

Advantageously, the offset is determined depending on a second pair of values indicative of a second efficiency and a second reference time for switching out of the first pre-determined operating mode. This improves the robustness of the calculation because the offset can be determined not only when switching into the first pre-determined operating mode but also when switching out of the first pre-determined operating mode.

Preferably the switching of the first induction coil according to the first set point is triggered.

Advantageously, the switching of the second induction coil according to second set point is triggered. This way, the outputs necessary to control the induction coil is generated.

Advantageously, two first set points or two second set points are determined. This way the set points for switching into the first operating mode and out of the first operating mode and for switching into the second operating mode and for switching out of the second operating mode are calculated respectively.

Preferably, one of the two first or second set points indicates a switch-on time and the other indicates a switch-off time. Using switch-on and -off times simplifies the calculation and the processing time.

Further developments of the invention can be gathered from the dependent claims and the following description.

## Brief description of the figures

In the following, the invention will be explained further making reference to the attached drawings.

Figure 1 schematically shows part of an inductive charging system.

Figure 2 schematically shows a device for controlling an inductive coil.

Figure 3 depicts a first efficiency characteristic.

Figure 4 depicts part of the inductive charging system.

Figure 5 depicts a second efficiency characteristic.

Figure 6 depicts a third efficiency characteristic.

Figure 7 depicts a flow chart according to a method for controlling an inductive coil.

## Description of the embodiments

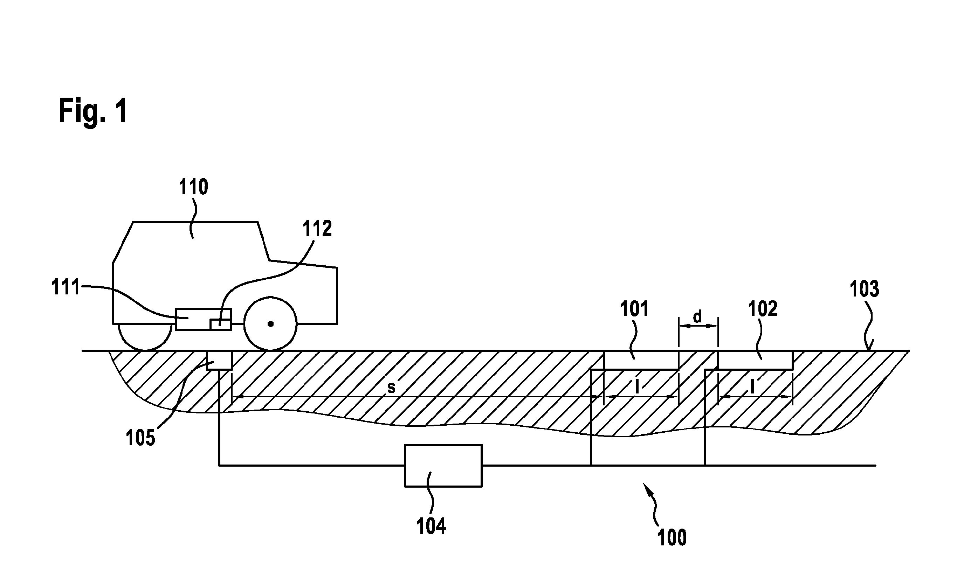

Figure 1 shows part of an inductive charging system 100. The inductive charging system 100 comprises as primary coils, a first induction coil 101 and a second induction coil 102. The first induction coil 101 and the second induction coil 102 are integrated into the pavement of a road 103 one after another in the driving direction of the lane of the road. The mounting position may vary, in particular the coils may be installed over the pavement or at the side of the road. In general the mointing position is such that an electromagnetic field generated by the primary coils penetrates an area above the pavement. Further inductive coils may be mounted consecutively in the road 103 as part of the inductive charging system and are not depicted in Figure 1,

The inductive charging system 100 furthermore comprises a device 104 for controlling an induction coil. According to the example the device 104 is connected to the first induction coil 101 and the second induction coil 102 respectively. The device 104 may be connected to any consecutive induction coil as well. Several devices 104 may be used along to road 103 to control the induction coils separately as well.

The inductive charging system 100 furthermore comprises according to the example an antenna 105. The antenna 105 is connected to the device 104. Furthermore the antenna 105 is mounted near the road 103 for example integrated into the pavement of the road 103 near the surface of the road 103. The antenna 105 may be mounted next to the road 103 as well.

Figure 1 depicts a vehicle 110 having a third induction coil 111 and a transceiver 112. Preferably the third induction coil 111 and the transceiver 112 are mounted near the underbody of the vehicle 110 facing downwards towards the road 103 when the vehicle 110 is driving on the road 103.

The mounting position of the first induction coil 101 and the second induction coil 102 as well as the third induction coil 111 is selected so that an preferably alternating electromagnetic field generated by the first induction coil 101 or the second induction coil 102 penetrates the third induction coil 111 when the vehicle 110 is driving on the road 103 over or near the mounting position of the first induction coil 101 or the second induction coil 102 respectively.

Furthermore, the mounting position of the antenna 105 and the transceiver 112 is selected so that signals can be transmitted between the two. For example a signal sent by the antenna 105 is receivable by the transceiver 112 when the vehicle 110 is driving on the road 103 over or near the mounting position of the antenna 105. Likewise, the transceiver 112 is adapted to emit a signal receivable by the antenna 105.

In one example the transceiver 112 is adapted to send an identification of the vehicle 110 and additional information upon receipt of a request from the antenna 105. The additional information includes for example information about the third induction coil 111 and information about the power transferred to the third induction coil 111. The information about the third induction coil 111 is for example its resistance. The information about the power transferred to the third induction coil 111 is for example the electrical current flowing through the third induction coil 111 as value in Ampere. Alternatively the power transferred in Watt may be used. Additionally in the example the additional information comprises information about the speed of the vehicle 110. The data link between the transceiver 112 and the antenna 105 is in this example a wireless link, e.g. according to the Bluetooth or IEEE 802.11 standard. In this case the antenna 105 is adapted to communicate according to the suitable standard with the transceiver 112.

In another example, the transceiver 112 comprises an active wireless transmitter and a radio frequency identification tag including the identification of the vehicle 110 mounted to the vehicle 110. The radio frequency identification tag may be active or passive. The active wireless transmitter is adapted to use aforementioned wireless link to transmit the additonal information. In this case, the antenna 105 comprises a first circuitry adapted to send radio frequency signals suitable to trigger a response including the identification of the vehicle 110 from the radio frequency identification tag. This signal for example triggers the tag to return the information about the vehicle 110 stored in the transceiver 112, e.g. via the oscillating circuit of the radio frequency identification tag.

The active wireless transmitter of the transceiver 112 is in this example used to send the additional information. For example the information about the power transferred or the speed of the vehicle 110, may be sent. This additional information is for example determined in the vehicle 110 by the inductive charging system and the engine controller respectively. To that end the transceiver 112 may be connectable to a data bus of the vehicle 110 for receiving the respective information. Alternatively the additional information may be determined by the transceiver 112 and returned in the response.

The antenna 105 is for example adapted to send out the signal to request the response at pre-determined time intervals, for example every $10^{th}$ millisecond. Furthermore, the antenna 105 is adapted to send any response received from the transceiver 112 to the device 104 via a data link between the two.

The distance between the antenna 105 and the first induction coil 101 is labelled "s" in figure 1. For example, the distance is s = 10m.

The distance between the first induction coil 101 and the second induction coil 102 is labelled "d" in figure 1. For example, the distance is d = 1m.

In figure 1 the length of the first induction coil 101 and the second induction coil 102 are labelled "1". The dimensions of the first induction coil 101 and the second induction coil 102 are for example a square of 1m x 1m. Hence for example the length is 1 = 1m.

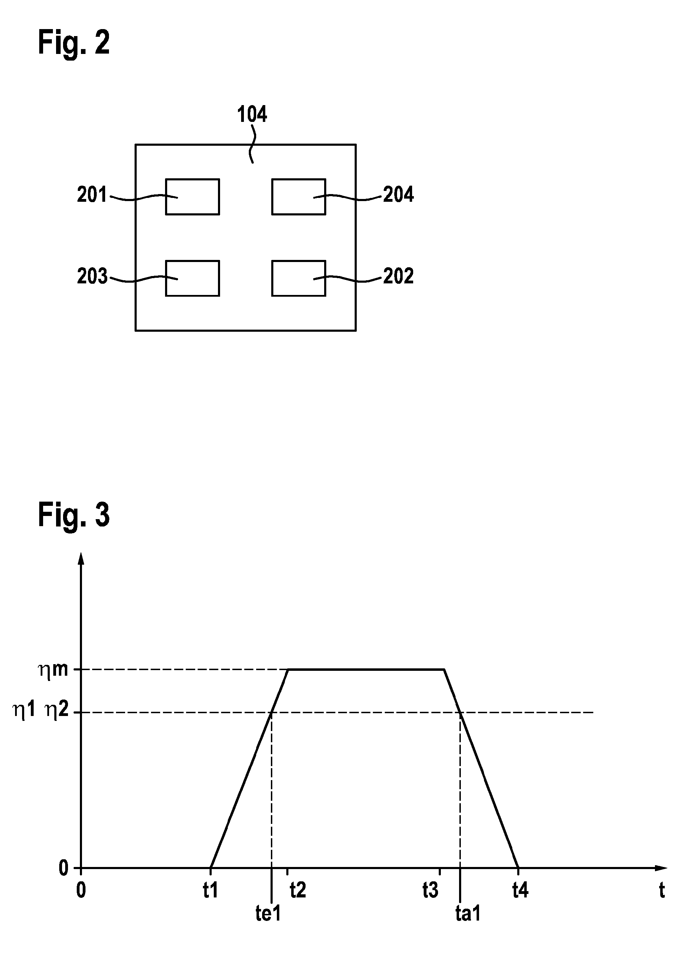

Figure 2 depicts the device 104 for controlling the induction coil. According to the example, the device 104 comprises a processor 201 adapted to determine a first set point ts1 for the switching time for operating the first induction coil 101 in a first pre-determined operating mode and adapted to determine a second set point ts2 for the switching time for operating the second electric coil 102 in a second pre-determined operating mode, wherein the second set point ts2 is determined depending an offset x. The second set point ts2 may be determined depending on the first set point ts1.

Furthermore, the device 104 comprises an actuator 202 adapted to trigger switching of the first induction coil 101 according to the first set point ts1 or to trigger the switching of the second induction coil 102 according to the second set point ts2.

Furthermore, the device 104 comprises an input 203 to trigger the sending of the signal by the antenna 105 and receive information about the third induction coil 111. For example, the input 203 is connectable to the antenna 105 via aforementioned data link. Alternatively, the antenna 105 may be integrated into the device 104 as part of the input 203.

The input 203 is adapted to receive the information about the identification of the vehicle 110 and the additional information from the transceiver 112 via the antenna 105.

For example the input 203 is adapted to trigger the sending of the radio frequency every $10^{th}$ millisecond. In one example the input 203 is adapted to upon receipt of the response including the identification of the vehicle 110, trigger the request for additional information via the wireless link. This way the information about the identification of the vehicle 110 is received as the radio frequency identification information from the radio frequency identification device and the additional information, e.g. the information about the power transfer to the third induction coil 111 or the speed of the vehicle 110 is received via the wireless link. In another example both requests are sent simultaneously or as a single request.

According to the example the input 203 is adapted to determine information about the power transfer between the first induction coil 101 to the third induction coil 111. In particular the input 203 is adapted to determine a measured efficiency $\eta x$ of the power transfer from the received additional information and information about the first induction coil 101. For example the receive information about the power transferred is used. The measured efficiency $\eta x$ is for example calculated from the received transferred power as ratio between the power used to generate the electromagnetic field in the first induction coil 101 and the currently transferred power. In case of transferring information about the third induction coil 111 and the electrical current flowing through the third induction coil 111, the currently transferred power is determined from that information and the ratio is calculated.

Alternatively to receiving information about the third induction coil 111 directly, the input 203 may be adapted to receive information that allows to look up the information about the third induction coil 111 in storage 204, e.g. in a database. In that case for example the identifier of the vehicle 110 stored in the transceiver 112, e.g. the radio frequency identification of the radio frequency identification tag, may be received and the information about the third induction coil 111 may be stored in the storage 204 assigned to the identification.

The storage 204 may be internal to the device 104 as depicted in figure 2 or external. In the latter case an additional data link not depicted in figure 2 may be used by the input 203 to access the storage.

The information is for example stored in an initialization when manufacturing the device 104 or stored as update by an administrator at any time.

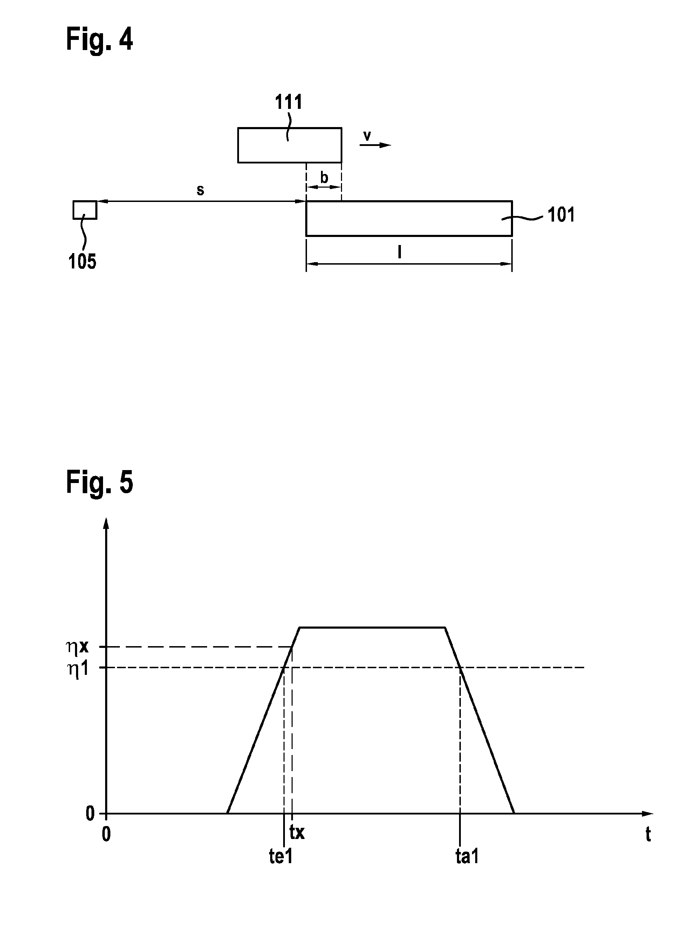

The storage 204 is adapted according to the example to store an efficiency characteristic for the inductive charging system 100 as well. The efficiency characteristic is explained making reference to figure 3 and 4.

Figure 3 depicts an exemplary efficiency characteristic for the power transfer between the first induction coil 101 and the third induction coil 103 over time. According to the example the efficiency characteristic is a characteristic curve. Any other form of storing this information, e.g. as array, may be used as well.

Figure 4 depicts the position of the third induction coil 111 relative to the first induction coil 101. The direction of travel on the lane of the road 103 in which the first induction coil 101 is installed is depicted in figure 4 as arrow. It is assumed that the vehicle 110 and hence the third induction coil 111 moves in the travel direction with a speed v.

While the vehicle 110 and hence the third induction coil 111 passes over the lane near the position of the first induction coil 101 the efficiency of the power transfer changes depending on the relative position of the first induction coil 101 and the third induction coil 103. Referencing Figure 3, the efficiency is 0 while the third induction coil 111 does not overlap with the first induction coil 101. This is due to the fact that the electromagnetic field generated by the first induction coil 101 does not penetrate the third induction coil 111 in that case.

Starting at the time t=0 the distance between the third induction coil 111 and the first induction coil 101 is equal to the distance s between the antenna 105 and the first induction coil 101. During the time the vehicle 110 takes to travel this distance s, the efficiency stays at 0 until the third induction coil 111 starts to overlap with the first induction coil 101. The time the overlap starts is labelled t1 in Figure 3. At the time t1 the efficiency of the power transfer increases as depicted in figure 3 until a maximum efficiency $\eta$m is reached. According to the example the maximum efficiency $\eta$m is reached when the third induction coil 111 is above the first induction coil 101 entirely. The corresponding time is labelled t2 in figure 3. The efficiency remains at the maximum efficiency $\eta$2 as depicted in figure 3 while the third induction coil 111 remains entirely above the area of the first induction coil 101. When the third induction coil 111 starts to leave the area above the first induction coil 101 the efficiency starts to drop from the maximum efficiency $\eta$m down to 0. The corresponding time is labelled t3 in figure 3. The efficiency is 0 as soon as the third induction coil 111 entirely left the area of above the first induction coil 101. The corresponding time is labelled t4 in figure 3. According to the example the increase to and the reduction from the maximum efficiency $\eta$m is linear.

The shape of the efficiency characteristic according to figure 3 may vary depending on the first induction coil 101 or the third induction coil 111 or their respective mounting positions. In particular, non-linear shapes may be used in order to describe the efficiency characteristic. The efficiency characteristic is for example measured in a calibration by measuring the power transferred from the first induction coil 101 to the third induction coil 111 while the third induction coil 111 is moving with constant speed v across the area above the first induction coil 101. Several different efficiency characteristics may be measured and stored for different constant speeds v as well.

Figure 3 depicts a first pair of values indicative of first efficiency $\eta$1 and a first reference time te1 for switching into the first pre-determined operating mode.

Furthermore, figure 3 depicts a second pair of values indicative of a second efficiency $\eta$2 and a second reference time ta1 for switching out of the first pre-determined operating mode. According to an example, the first efficiency $\eta$1 and the second efficiency $\eta$2 are selected as 80 % of the the minimum efficiency needed or the optimal efficiency. The optimal efficiency is for example defined as a lossless power transfer between the first induction coil 101 and the third induction coil 111. The minimum efficiency needed is for example defined as a value less than the optimal efficiency but sufficient to transfer the energy inductively. Accordingly, the first reference time te1 is the time at which the efficiency reaches the first efficiency $\eta$1 when the third induction coil 111 is moving into the area of the first induction coil 101. Likewise the second reference time ta1 indicates the point in time at which the efficiency drops down to or below the second efficiency $\eta$2 when the third induction coil 111 leaves the area above the first induction coil 101. According to the example, the first reference time corresponds to the situation depicted in figure 4 where the third induction coil 111 overlaps with the first induction coil 101 by an area characterised by the distance b that the third induction coil 111 already entered into the area above the first induction coil 101 in travel direction. Likewise, according to the example, the second reference time ta2 corresponds to the situation where the third induction coil 111 left the area above the first induction coil 101 except for the distance b.

In the example of the dimensions 1x1m of the first induction coil 101, for example the third induction coil 111 has the dimensions 1x1m. In this case, for example, the first efficiency $\eta$1 and the second efficiency $\eta$2 are measured in the calibration as 80 % efficiency corresponding to an overlap by 1/3 of the area of the third induction coil 111. This means, that b equals 1/3 of a meter.

The efficiency characteristic as depicted in figure 3 is, for example, stored in the storage 204 of the device 104.

Furthermore, according to the example, the distance s between the antenna 105 and the first induction coil 101 as well as the dimensions of the first induction coil 101, in particular the length 1, and the dimensions of the third induction coil 111, or the distance b, is stored in the storage 204. Alternatively to store the distance b in the storage 204, the transceiver 112 may be adapted to provide the dimensions of the third induction coil 111 or the distance b to the device 104 via the antenna 105 upon request. In any case the information about the third induction coil 111 and the first induction coil 101 may be determined in the calibration.

Furthermore, the processor 201 is adapted to determine the first set point ts1 for the switching time for operating the first induction coil 101 in the first pre-determined operating mode. The first set point ts1 is, for example, determined by calculating the first reference time te1:

$$\text{ts1} = \text{te1} = (s+b)/v.$$

The vehicle speed v is for example determined by measurement or received from the transceiver 112 via the antenna 105. In the first case, for example, the antenna 105 may comprise a sensor to determine the speed of the vehicle 110 while it is moving over the area of the antenna 105. In the second case, the transceiver 112 may comprise an interface to provide the information from the vehicle's speedometer.

Additionally, the processor 201 may be adapted to determine two first set points ts1, ts2. In that case, one of the set points is the aforementioned set point ts1 = te1. The other first set point ts2 in that case is for example ts2 = ta1. The other first set point is for example calculated from the second reference time ta1 as:

$$\text{ts2} = \text{ta1} = (s+l+b)/v.$$

In the example the first pre-determined operating mode is the mode in which the first induction coil 101 generates an electromagnetic field suitable to charge the vehicle 110 via the third induction coil 111. It is assumed that the first induction coil 101 is not generating this electromagnetic field while it is not in the first pre-determined operating mode.

The actuator 202 is adapted to trigger switching of the first induction coil 101 according to aforementioned two first set points ts1, ts2. For example, the actuator 202 switches the first induction coil 101 into the first pre-determined operating mode when the time that the vehicle 110 travelled since it passed the first antenna 105 reaches the time equal to the first set point ts1. This means that the electromagnetic field is switched on by the device 104 when the vehicle 110 is approximately at the position where the third induction coil 111 overlaps by a third with the first induction coil 101.

Assuming in an example that the distance is b = 0,33m, the speed of the vehicle 110 measured at the position of the antenna 105 is v = 50 km/h and the distance between the mounting position of the antenna 105 and the first induction coil 101 is s = 10 m, the first set point results as the first reference time ts1 = te1 = 744 ms.

Likewise, according to this example, it is assumed that the dimensions of the first induction coil 101 are 1x1 m and that the dimensions of the third induction coil 111 are 1x1 m. Then the other first set point ts2 for switching the first induction coil 101 out of the first pre-determined operating mode, i.e. to switch off the generation of this electromagnetic field, is the second reference time ts2 = ta1 = 816 ms.

The use of the aforementioned calculation results in a minimum needed or an optimal charging efficiency when the vehicle 110 travels the distance s+1+d at the same constant speed that was determined as speed v. In that case the calculated set points ts1, ts2 result in switching the first induction coil 101 into the first pre-determined operating mode at the first reference time te1 and out of the first pre-determined operating mode at the second reference time te2. However, the efficiency characteristic depends on the actual vehicle speed. Hence, in case the actual vehicle speed changes after the first set points ts1 and ts2 were determined, the switching of the first induction coil 101 will result in an offset between the reference values te1, te2 and the actual switching time tx. This is explained referencing figures 3, 5 and 6.

Figure 5 depicts the efficiency characteristic of figure 3. Assuming the same speed v was determined as before and the distances s, 1, b and dimensions of the coils being the same as well, figure 5 depicts the situation in which the measured efficiency ηx is different from the first efficiency η1. According to figure 5, the measured efficiency ηx is larger than the first efficiency η1. According to figure 5, the measured efficiency ηx corresponds to an actual switching time tx later than the first reference time te1 as depicted in figure 5. The actual switching time tx represents in this case the first set point ts1 calculated with the measured vehicle speed v. Due to the changed vehicle speed the first set point ts1 results in an offset x in the efficiency characteristic. Considering this, the offset x between the first reference time te1 and the actual switching time tx can be calculated:

$$x = tx - te1.$$

Assuming in an example, the measured efficiency ηx is 90 % and the first efficiency η1 is 80 %, the offset x according to the example equals x = 6 ms. This means that the vehicle 110 actually travelled at a speed faster than the speed v measured at the position of the antenna 105.

In case more than one efficiency characteristics for different speeds v are stored, the characteristic that is closest to the determined vehicle speed v is selected to determine the reference times and the offset.

This offset x means that using the first set points ts1, ts2 as calculated above for switching into and out of the first pre-determined operating mode of the first induction coil 101 results in a less efficient power transfer and more radiation in the environment, because the first induction coil 101 is switched on and off too late for the minimum alignment needed or the optimal alignment of the induction coils.

In the example a second pre-determined operating mode is the mode in which the second induction coil 102 generates an electromagnetic field suitable to charge the vehicle 110 via the third induction coil 111. It is assumed that the second induction coil 102 is not generating this electromagnetic field while it is not in the second pre-determined operating mode.

Accordingly the processor 201 is adapted to determine the second set point for the switching time for operating the second induction coil 102 in the second pre-determined operating mode depending on the offset x. Considering the distance s between the antenna 105 and the first induction coil 101, the distance d between the first induction coil 101 and the second induction coil 102 as well as the dimensions of the first induction coil 101, in particular the distance 1, the second set point is, for example, calculated as:

$$te2 = ((s+1+d+b)/v)-x.$$

According to the example, this means that the vehicle speed difference is compensated for by using for the second set point the offset x determined from the efficiency of the power transfer between the first induction coil 101 and the third induction coil 111. In the example x = 6 ms and te2 = 882 ms. This improves the accuracy of the actual switching times of the second induction coil 102 without having to measure the vehicle speed again or to determine the distance of the vehicle 110 from the second induction coil 102 with another sensor.

Additionally, the processor 201 may be adapted to determine the two second set points, for example, the second set point te2 according to the aforementioned calculation for switching the second induction coil 102 into the second pre-determined operating mode. Furthermore, the other second set point may be calculated for switching the second induction coil 102 out of the second pre-determined operating mode. This other second set point is, for example, calculated considering the same dimensions as mentioned above by:

$$ta2 = ((s+21+d+b)/v) - x.$$

In the example of x = 6 ms this means ta2 = 954 ms. This means also that both set points are calculated by the processor 201 depending on the first set point and an offset. The dependence on the first set point is included in the aforementioned formula by the term (s+b)/v. Considering this, the processor 201 may be adapted to store the first set point ts1, ts2 after the first calculation and reuse the value to determine the second set point te2, ta2. In this case only the offset x is calculated for the second induction coil 102 and for any other number of induction coils subsequently following on the road 103.

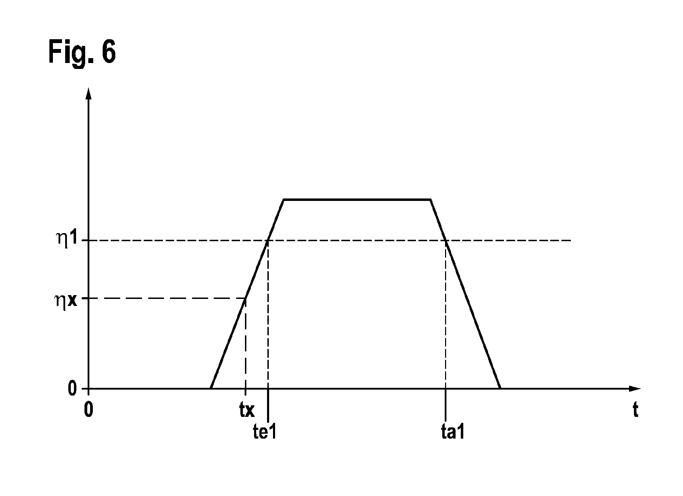

Figure 6 depicts the situation when the measured efficiency $\eta x$ is less than the first efficiency $\eta 1$. According to figure 6, the same efficiency characteristic as depicted in figure 3 and 5 is used. According to figure 6, the measured efficiency $\eta x$ corresponds to an actual switching time tx earlier than the first reference time te1. The offset x is calculated according to the formula described above:

$$x = tx - te1.$$

According to an example, the measured efficiency $\eta x$ = 40 %. This results according to the example in an offset x = -12 ms.

This means that the difference between the measured vehicle speed v = 50 km/h at the position of the antenna 105 differs from the actual vehicle speed at the first induction coil 101.

The second set point te2 and the other second set point ta2 are determined using the aforementioned formula:

```
te2 = ((s+l+d+b)/v) - x,

ta2 = ((s+2l+d+b)/v) - x.
```

As described above, the processor 201 may be adapted to determine the first set point, i.e. the term (s+b)/v and store it for later use. In both cases, the second set point is determined depending on the offset or the first set point and the offset.

In any case, the offset x is determined depending on the difference between the first set point and a reference time. This means that the actual switching time tx that corresponds to the measured efficiency $\eta x$ according to figure 5 and 6 is the first set point ts1. In the ideal case of figure 3, the first set point ts1 and the first reference time te1 are the same, i.e. tx = ts1 = te1.

Furthermore, this means that the offset x is determined from information about the third induction coil 111 in particular the efficiency of the power transfer between the first induction coil 101 and the third induction coil 111.

This also means that the offset x is determined depending on the first pair of values indicative of the first efficiency $\eta 1$ and the first reference time te1 for switching into the first pre-determined operating mode. Likewise, this means that the offset x is determined depending on the second pair of values indicative of the second efficiency $\eta 2$ and the second reference time ta1 for switching out of the first pre-determined operating mode.

According to figures 3, 5 and 6 the second efficiency $\eta 2$ is the same as the first efficiency $\eta 1$. This is due to the symmetric shape of the energy transfer efficiency characteristic. However, depending on the induction coils used, this second efficiency $\eta 2$ may be different from the first efficiency $\eta 1$.

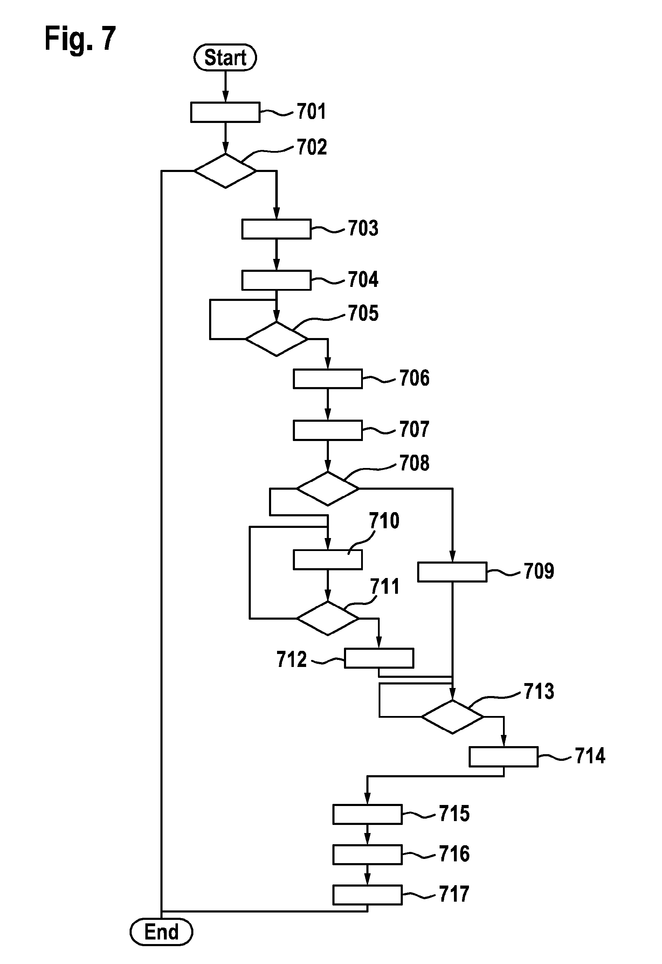

A method for controlling an induction coil is described below making reference to figure 7. The method starts, for example, when at the antenna 105 an approaching vehicle 110 is detected.

The detection may be based on hand shake for a connection between the input 203 via the antenna 105 and the transceiver 112.

Alternatively the speed v of the vehicle 110 may be measured. The speed is for example measured by a radar speed sensor integrated into the antenna 105. At the start, a time counter t is started at t=0. The time counter once started is configured for example to measure the real time, e.g. in milliseconds. Any other timer may be used, e.g. a cycle time of the processor 201.

After the start, a step 701 is executed.

In the step 701 information, e.g. about the identification of the vehicle 110 and the additional information is requested from the vehicle 110. Optionally some information about the third charging coil 110 may be requested from the data base. For example, the identification of the vehicle 110 is requested from the radio frequency identification tag. To that end, for example, the antenna 105 sends a radio frequency identification signal to the radio frequency identification tag on the vehicle 110 requesting the radio frequency identification from the tag. The additional information is for example requested via the wireless link according to IEEE 802.11 standard from the transmitter. In this example the transceiver 112 upon request signal via the antenna 105 provides the information about the vehicle 110 and the additional information about the vehicle 110. The information about the third induction coil 111, the transferred power and the speed v of the vehicle 110 are thus provided. Afterwards, a step 702 is executed.

In step 702, a test is performed to determine whether to charge the vehicle 110 or not. For example the charging and billing has to be completed successfully or the identification of the vehicle 110 has to be found in the database. In case charging is allowed, a step 703 is executed, otherwise the method ends. Charging and billing may include an optional step of sending charging and billing information, in particular the radio frequency identification received from the vehicle 110 to a charging and billing server. The charging and billing is optional and may be omitted.

In the step 703 the distance s between the antenna 105 and the first induction coil 101 the distance d between the first induction coil 101 and the second induction coil 102 the length 1 are determined, e.g. read from storage. Furthermore, the distance b and the vehicle speed v are determined. The distance b may be looked up in storage using the identification of the vehicle 110. The vehicle speed v is for example determined from the measurement performed at the position of the antenna 105. Alternatively the vehicle speed v and optionally also the distance b are determined from the information received from the transceiver 112 of the vehicle 111 in step 701. Any of the parameters may also be read from storage 204.

Afterwards a step 704 is executed.

In step 704, the first set point ts1, ts2 is determined as described above from the stored efficiency characteristic. For example, the first set point ts1 = te1 and the other first set point ts2 = ta1 for switching the first induction coil 101 into and out of the first pre-determined operating mode, e.g. for switching the electromagnetic field on and off respectively, are determined. Afterwards, a step 705 is executed.

In the step 705, a test is performed whether the time counter t reached the first set point ts1. In case the time counter reached that value, a step 706 is executed. Otherwise, step 705 is executed.

In step 706 the first induction coil 101 is switched to the first pre-determined operating mode, e.g. in which the first induction coil 101 generates the electromagnetic field. Afterwards a step 707 is executed.

In step 707 the measured efficiency $\eta x$ and the actual switching time tx are determined. For example, the efficiency $\eta x$ is calculated from the measured power flow between the first induction coil 101 and the third induction coil 111. The actual switching time tx is determined as the time corresponding to the efficiency $\eta x$ that was measured in the efficiency characteristic. Afterwards, a step 708 is executed.

In step 708 a test is performed to determine whether the measured efficiency $\eta x$ is smaller than the maximum efficiency $\eta m$: In case the measured efficiency $\eta x$ is smaller than the maximum efficiency $\eta m$ a step 709 is executed. Otherwise a step 710 is executed.

In step 709, the offset x is determined. For example, the offset x is determined as x=tx-tel.

To illustrate this, referencing figure 5, in an example where the measured efficiency $\eta x$ is larger than the first efficiency $\eta 1$ and smaller than the maximum efficiency $\eta m$, step 709 is executed and the offset x is calculated as described above.

This example means that the measured efficiency $\eta x$ indicated that the first induction coil 101 was triggered to generate the electromagnetic field too late because when the first induction coil 101 started generating the electromagnetic field, the efficiency already was higher than the minimum efficiency value needed or the optimal efficiency value for starting the energy transfer indicated by the pair of values indicating the first efficiency $\eta 1$ and the first reference time te1. This means that an earlier switching time would provide for better efficiency.

According to another example illustrated referencing figure 6, when the measured efficiency $\eta x$ is smaller than the first efficiency $\eta 1$, step 709 is executed and the offset x is calculated as described above.

According this example, the measured efficiency $\eta x$ is smaller than the pair of values indicating the first efficiency $\eta 1$ and the first reference time tea1. This indicates that the first induction coil 101 was switched on too early resulting in less than needed or less than optimal efficiency.

Afterwards a step 713 is executed.

In step 713 a test is performed to determine whether the time counter t reached the other first set point ts2 for switching the first induction coil 101 out of the first pre-determined operating mode, e.g. to switch off the generation of the electromagnetic field in the first induction coil 101. In particular, the test is performed using the other first set point ts2. In case the time counter t reached the other first set point ts2, a step 714 is executed. Otherwise, the step 713 is executed.

In step 714, the first induction coil 101 is triggered to switch out of the first pre-determined operating mode, e.g. to switch off the generation of an electromagnetic field. Afterwards, a step 715 is executed.

In step 710, the measured efficiency $\eta x$ and the actual switching time tx are determined as described in step 707. Afterwards, a step 711 is executed.

In step 711, a test is performed to determine if the measured efficiency $\eta x$ is smaller or equal to the second efficiency $\eta 2$. In case the measured efficiency $\eta x$ is smaller or equal to the second efficiency $\eta 2$, a step 712 is executed. Otherwise the step 710 is executed. This considers the case in which the measured efficiency $\eta x$ already has reached the maximum value $\eta m$ when switching the first induction coil 101 into the first pre-determined operating mode. In this case to determine the offset x the measured efficiency $\eta x$ has to reach the second efficiency $\eta 2$ when the vehicle 160 leaves the area above the first induction coil 101. In this case the delay of switching on the first induction coil 101 was so large that the measured efficiency $\eta x$ is already in the saturation depicted as flat line of $\eta m$ in the efficiency characteristic in the figures 3, 5 or 6. Furthermore, this means that the corresponding offset x cannot be determined because the measured efficiency $\eta x$ corresponds to multiple actual switching times tx and hence in a single measurement the displacement between the reference times te1 or ta1 and the actual switching time tx is arbitrary. Waiting for the efficiency to drop allows to determine the correct offset x from the falling flank of the efficiency characteristic.

In step 712, the offset x is determined from the actual switching time tx corresponding to the measured efficiency $\eta x$ as x=tx-ta1. Optionally the other first set point ts2 is corrected at this time to ts2 = tx. Afterwards, step 713 is executed.

In the step 715 the second set point for switching the second induction coil 102 into the second operating mode is determined. For example, the second set point is determined as

```
te2 = ((s+l+d+b)/v) - x.
```

Alternatively the second set point te2 is determined from the first set point ts1 and the offset x as

$$te2 = ts1 + (1+d)/v - x.$$

Afterwards, a step 716 is executed.

In step 716, the other second set point for switching the second induction coil 102 out of the second operating mode is determined. For example, the other second set point is determined as

$$ta2 = ((s+2l+d+b)/v) - x.$$

Alternatively the other second set point ta2 is determined from the other first set point ts2 and the offset x as

$$ta2 = ts2 + (2l+d)/v - x.$$

Afterwards, a step 717 is executed.

In step 717 the second set points te2, ta2 are used to trigger switching the second induction coil 102 into and out of the second operating mode as described above.

Afterwards, the method ends.

The steps of the methods described above may vary in order and may not be executed all every time the method is used. Furthermore, the method may not end after step 717 but rather the method may be repeated to determine the set points for the consecutive primary coils in the road 103 until the vehicle 110 passed all of the primary coils in the road 103.

According to the method describe above, one antenna 105 is used. Rather than that, several antennas 105 may be used, one or more for an individual first induction coil 101 or second induction coil 102. Likewise several more induction coils maybe used with a single antenna 105. The principles of the method described above remain the same. The offsets and set points may be calculated from the vehicle speed measured at the time the vehicle 110 passes any of the antennas then as well.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of the above-described method can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for controlling an induction coil, comprising determining from information about the power transfer of a first induction coil (101) a set point (te2, ta2) for a second induction coil (102).

2. The method according to claim 1, comprising determining (704) a first set point (ts1, ts2) for the switching time for operating the first induction coil (101) in a first predetermined operating mode, determining (715, 716) a second set point (te2, ta2) for the switching time for operating the second induction coil (102) in a second predetermined operating mode.

3. The method according to claim 2, wherein the second set point (te2, ta2) is determined (715, 716) depending on the first set point (ts1, ts2) and an offset (x).

4. The method according to claims 1 to 3, wherein the offset (x) is determined (709, 712) depending on the difference between the first set point (ts1, ts2) and a reference time (te1, ta1).

5. The method according to claim 1 to 4, wherein the offset (x) is determined (709, 712) from information about a third induction coil (111), in particular the efficiency ($\eta$x) of the power transfer between the first induction coil (101) and the third induction coil (111).

6. The method according to claims 2 to 4, wherein the first set point (ts1, ts2) is determined (704) from information about the speed (v) at which the third induction coil (111) is moving relative to the first induction coil (101).

7. The method according to claims 2 to 6, wherein the first set point (ts1, ts2) is determined (704) from information about the distance between the third induction coil (111) and the first induction coil (101).

8. The method according to claims 1 to 7, wherein the offset (x) is determined (709) depending on a first pair of values indicative of a first efficiency ($\eta$1) and a first reference time (te1) for switching into the first predetermined operating mode.

9. The method according to claim 1 to 8, wherein the offset is determined (712) depending on a second pair of values indicative of a second efficiency ($\eta$2) and a second reference time (ta1) for switching out of the first predetermined operating mode.

10. A device (104) for controlling an induction coil, comprising a processor (201) operable to determine from information about the power transfer of a first induction coil (101) a set point (te2, ta2) for a second induction coil (102).

11. The device (104) according to claim 10, wherein the processor (201) is operable to determine (704) a first set point (ts1, ts2) for the switching time for operating the first induction coil (101) in a first predetermined operating mode, and adapted to determine (715, 716) a second set point (te2, ta2) for the switching time for operating a second induction coil in a second predetermined operating mode.

12. The device (104) according to claim 11, wherein the second set point (te2, ta2) is determined (715, 716) depending on the first set point (ts1, ts2) and an offset (x).

13. The device according to claim 13, comprising an actuator (202) adapted to trigger switching (719) of the first induction coil (101) according to the first set point (ts1, ts2) or to trigger switching of the second induction coil (102) according to the second set point (te2, ta2).

14. The device according to claims 13 or 14, comprising an input (203) adapted to receive information about a third induction coil (111), and wherein the offset (x) is determined (709, 712) from information about the third induction coil (111), in particular the efficiency ($\eta$x) of the power transfer between the first induction coil (101) and the third induction coil (111).

**Amended claims in accordance with Rule 137(2) EPC.**

**1.** A method for controlling an induction coil, **comprising**

- determining (704) a first set point (ts1, ts2) for a switching time for operating a first induction coil (101) in a first predetermined operating mode,
- determining (715, 716) a second set point (te2, ta2) for a switching time for operating a second induction coil (102) in a second predetermined operating mode, from information about the power transfer of the first induction coil (101) **characterized in that** the first set point (ts1, ts2) is determined (704) from information about the speed (v) at which a third induction coil (111) is moving relative to the first induction coil (101).

**2.** The method according to claim 1, wherein the second set point (te2, ta2) is determined (715, 716) depending on the first set point (ts1, ts2) and an offset (x), wherein the offset (x) is determined (709, 712) depending on the difference between the first set point (ts1, ts2) and a reference time (te1, ta1) [claim 4].

**3.** The method according to claim 2, wherein the offset (x) is determined (709, 712) from information about the third induction coil (111), in particular the efficiency ($\eta x$) of the power transfer between the first induction coil (101) and the third induction coil (111).

**4.** The method according to claims 2 to 3, wherein the first set point (ts1, ts2) is determined (704) from information about the distance between the third induction coil (111) and the first induction coil (101).

**5.** The method according to claims 1 to 4, wherein the offset (x) is determined (709) depending on a first pair of values indicative of a first efficiency ($\eta 1$) and a first reference time (te1) for switching into the first predetermined operating mode.

**6.** The method according to claim 1 to 5, wherein the offset is determined (712) depending on a second pair of values indicative of a second efficiency ($\eta 2$) and a second reference time (ta1) for switching out of the first predetermined operating mode.

**7.** A device (104) for controlling an induction coil, comprising a processor (201) operable to determine (704) a first set point (ts1, ts2) for a switching time for operating a first induction coil (101) in a first predetermined operating mode, determine (715, 716) a second set point (te2, ta2) for a switching time for operating a second induction coil (102) in a second predetermined operating mode from information about the power transfer of the first induction coil (101), **characterized in that** the first set point (ts1, ts2) is determined (704) from information about the speed (v) at which a third induction coil (111) is moving relative to the first induction coil (101) [step 704, claim 11].

**8.** The device (104) according to claim 7, wherein the second set point (te2, ta2) is determined (715, 716) depending on the first set point (ts1, ts2) and an offset (x).

**9.** The device according to claim 8, comprising an actuator (202) adapted to trigger switching (719) of the first induction coil (101) according to the first set point (ts1, ts2) or to trigger switching of the second induction coil (102) according to the second set point (te2, ta2).

**10.** The device according to claims 9, comprising an input (203) adapted to receive information about a third induction coil (111), and wherein the offset (x) is determined (709, 712) from information about the third induction coil (111), in particular the efficiency ($\eta x$) of the power transfer between the first induction coil (101) and the third induction coil (111).

**Fig. 1**

**Fig. 2**

**Fig. 3**

# Fig. 4

# Fig. 5

# Fig. 6

**Fig. 7**

Europäisches
Patentamt

European
Patent Office

Office européen
des brevets

# EUROPEAN SEARCH REPORT

**Application Number**

EP 12 19 2417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/045773 A1 (PANDYA RAVI A [US] ET AL) 19 February 2009 (2009-02-19)<br>* paragraph [0026] - paragraph [0027]; figures 1A,2B,3C *<br>* paragraph [0040] *<br>----- | 1,2,10, 11,13 | INV.<br>B60L11/18<br>H02J5/00 |
| X | KR 2011 0041307 A (KOREA ADVANCED INST SCI & TECH [KR]) 21 April 2011 (2011-04-21)<br>* paragraph [0001]; figures 2-7 *<br>* paragraph [0022] - paragraph [0043] *<br>----- | 1,2,10, 11,13 | |
| X | KR 2011 0066822 A (KOREA ADVANCED INST SCI & TECH [KR]) 17 June 2011 (2011-06-17)<br>* paragraph [0006] - paragraph [0020]; figures 1-8 *<br>* paragraph [0026] - paragraph [0029] *<br>----- | 1-14 | |

| TECHNICAL FIELDS SEARCHED (IPC) |
|---|
| B60L<br>H02J |

The present search report has been drawn up for all claims

| Place of search | Date of completion of the search | Examiner |
|---|---|---|
| Munich | 10 April 2013 | Gospodinova, M |

EPO FORM 1503 03.82 (P04C01)

**ANNEX TO THE EUROPEAN SEARCH REPORT
ON EUROPEAN PATENT APPLICATION NO.** EP 12 19 2417

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2013

| Patent document cited in search report | Publication date | Patent family member(s) | Publication date |
|---|---|---|---|
| US 2009045773 A1 | 19-02-2009 | US 2009045773 A1<br>US 2011291615 A1 | 19-02-2009<br>01-12-2011 |
| KR 20110041307 A | 21-04-2011 | KR 20110041307 A<br>WO 2011046400 A2 | 21-04-2011<br>21-04-2011 |
| KR 20110066822 A | 17-06-2011 | NONE | |

EPO FORM P0459

For more details about this annex : see Official Journal of the European Patent Office, No. 12/82